# EUROPÄISCHE PATENTSCHRIFT

(11) **EP 1 292 485 B1**
(45) Veröffentlichungstag und Bekanntmachung des Hinweises auf die Patenterteilung: **11.02.2004**
(21) Anmeldenummer: 01949225.5
(22) Anmeldetag: 01.06.2001
(51) Int. Cl.: B62D 15/02, B60K 28/02

(54) **VERFAHREN ZUM DETEKTIEREN DER POSITION VON HÄNDEN AUF EINEM LENKRAD**
METHOD FOR DETECTING THE POSITION OF HANDS ON A STEERING WHEEL
PROCEDE DE DETECTION DE LA POSITION DES MAINS SUR UN VOLANT

(30) Priorität: 06.06.2000 DE 10027922
(43) Veröffentlichungstag der Anmeldung: 19.03.2003
(73) Patentinhaber: ROBERT BOSCH GMBH, 70442 Stuttgart (DE)
(72) Erfinder: KLAUSNER, Markus, Wexford, PA 15090 (US); GRIMM, Wolfgang, 1221 Pittsburgh, (US)
(86) Internationale Anmeldenummer: PCT/DE2001/002067
(87) Internationale Veröffentlichungsnummer: WO 2001/094188

(56) Entgegenhaltungen:
- EP-A- 0 545 497
- EP-A- 0 924 123
- WO-A-99/60531
- DE-A- 3 443 644
- DE-C- 19 753 160
- PATENT ABSTRACTS OF JAPAN vol. 018, no. 479 (M-1669), 7. September 1994 (1994-09-07) -& JP 06 156114 A (UEDA), 3. Juni 1994 (1994-06-03)
- PATENT ABSTRACTS OF JAPAN vol. 5, no. 37 (M-058), 10. März 1981 (1981-03-10) -& JP 55 160622 A (UEDA), 13. Dezember 1980 (1980-12-13)

## Beschreibung

### Stand der Technik

Die Erfindung betrifft ein Lenkrad mit Sensoren nach dem Oberbegriff des Anspruchs 1, ein Verfahren zum detektieren der Position von Händen auf einem Lenkrad nach dem Anspruch 5 und ein Steuergerät nach dem Anspruch 16.

Ein solches Lenkrad ist aus der JP 6 156 114 bekannt. Bekannt ist aus der JP 4183439 A1 und der JP 5345569 die Berührung eines Kfz-Lenkrads zu erfassen und auszuwerten.

In der JP 4183439 A1 wird offenbart, dass ein Elektrokardiogramm mit am Lenkrad angebrachten Elektroden erstellt wird. Durch eine Auswertung des Elektrokardiogramms kann eine nachlassende Aufmerksamkeit bzw. das Einschlafen des Fahrers delektiert werden.

Gemäß der JP 5345569 wird eine Preßkraft aufs Lenkrad gemessen mit dem Ziel, Daten über das Lenken zu erhalten, bevor der Fahrer lenkt, so dass das Ansprechverhalten des Kfz verbessert werden kann.

Im zuge der fortschreitenden Entwicklung von Kraftfahrzeugen (Kfz) hinsichtlich Unfallsicherheit, Fahrverhalten, Komfort und Anderem mehr, gewinnt die Erfassung des Fahrerverhaltens zunehmend an Bedeutung.

Der Erfindung liegt die Aufgabe zugrunde, einen unabhängigen Parameter des Fahrerverhaltens bereitzustellen, um die Redundanz von sicherheitsrelevanten Systemen, wie z. B. einer elektronischen Lenkung (steer-bywire) oder einer aktiven Fahrstabilitätsregelung, zu erhöhen sowie zusätzliche Plausibilitätskontrollen und erforderlichenfalls die Ausgabe von Warnsignalen an den Fahrer zu ermöglichen. Außerdem sollen die Funktionalitäten weiterer elektronische Sub-Systeme des Kfz durch den zusätzlichen unabhängigen Parameter erweitert und verbessert werden.

Diese Augabe wird erfindungsgemäß gelöst durch ein Lenkrad mit den Merkmalen des Anspruchs 1.

### Vorteile der Erfindung

Bei dem erfindungsgemäßen Lenkrad kann die Position der Hände des Fährers zuverlässig und mit ausreichend hoher örtlicher Auflösung detektiert werden. Die Position der Hände des Fahrers ist ein unabhängiger Parameter des Fahrerverhaltens von großer Bedeutung, da nahezu alle potentiell kritischen Fahrsituationen mit Aktivitäten der Hände des Fahrers verbunden sind. Deshalb kann die Auswertung der Positionen der Hände des Fahrers unteranderem die Sicherheit des Kfz deutlich verbessern.

Bei Varianten der Erfindung sind zwei oder drei am Umfang des Lenkrings um etwa 180° oder 120° versetzt angeordnete Sensoren vorhanden, so dass die Detektion der Hände und deren Position auf dem Lenkring durch die mögliche Unterscheidung in Daumen und Finger der Hand weiter verbessert wird.

Bei der Erfindung ist vorgesehen, dass die Segmente der Sensoren in Längsrichtung des Lenkrings kürzer als eine Fingerbreite sind, und dass der Abstand zweier Segmente der Sensoren zueinander in Längsrichtung des Lenkrings kleiner als eine Fingerbreite ist, so dass der Daumen und die Finger der Hand sicher voneinander unterschieden werden können und eine hohe örtliche Auflösung erreicht wird.

Weitere varianten der Erfindung sehen vor, dass dass die Sensoren resistiv, kapazitiv oder induktiv wirkende Sensoren sind, so dass diese an sich bekannten Sensoren für das erfindungsgemäße Lenkrad genutzt werden können.

Die eingangs genannte Aufgabe wird auch gelöst durch ein Verfahren zum Detektieren der Position von Händen auf einem Lenkrad bei welchem
- die Segmente der Sensoren numeriert werden,
- die Segmente erfasst werden, die von der oder den den Lenkring berührenden Händen beeinflusst werden,
- die Position von der oder den Händen auf dem Lenkring
wird ermittelt aus den Nummern der Segmente, die von den den Lenkring berührenden Händen beeinflusst werden, anhand der folgenden Regeln:
Wenn die Segmente im Uhrzeigersinn aufsteigend numeriert sind,
   a) ist die Nummer des vom Daumen der linken Hand berührten Segments größer als die kleinste Nummer des von den gegenüberliegenden Fingern noch berührten Segments, wenn die Finger den an der Lenkringaußenseite angeordneten Sensor berühren,
   b) ist die Nummer des vom Daumen der linken Hand berührten Segments stets kleiner als die größte Nummer des von den gegenüberliegenden Fingern noch berührten Segments, wenn die Finger den an der Lenkringinnenseite angeordneten Sensor berühren,
   c) ist die Nummer des vom Daumen der rechten Hand berührten Segments stets kleiner als die größte Nummer des von den gegenüberliegenden Fingern noch berührten Segments, wenn die Finger den an der Lenkringaußenseite angeordneten Sensor berühren,
   d) ist die Nummer des vom Daumen der rechten Hand berührten Segments stets größer als die kleinste Nummer des von den gegenüberliegenden Fingern noch berührten Segments, wenn die Finger den an der Lenkringinnenseite angeordneten Sensor berühren.

Durch dieses Verfahren kann die Position der Hände auf dem Lenkring zuverlässig, einfach und mit großer Sicherheit gegenüber fehlerhaften Ergebnissen detektiert werden. Damit steht ein unabhängiger Parameter zur Überprüfung des gemessenen Lenkwinkels (Fahrerwunsch) und für eine aktive Regelung der Fahrstabilität, incl. Eingriffen in den Lenkwinkel, zur Verfügung. Außerdem können auf Basis von Wechseln zwischen Händepositionsmustern Vorhersagen über Fahreraktionen getroffen werden, die die Fahrsicherheit weiter erhöhen.

Des weiteren kann die Position der Hände am Lenkrad als Eingangsgröße für folgende Funktionen genutzt werden:
- Warnung des Fahrers, wenn er nur eine oder keine Hand am Lenkrad hat.
- Dokumentation der Position der Hände und Korrelation dieser Informationen mit unfallrelevanten Daten (Unfalldatenschreiber),
- Identifikation von Fahrern durch Ermittlung fahrerspezifischer Positionen der Hände am Lenkrad, die trainierten Fahrermustern zugeordnet werden können. Damit kann das Kfz individuell an den Fahrer angepasst werden, ein Fahrtenbuch kann automatisch geführt werden und der Diebstahlschutz kann verbessert werden. Zur Erkennung des Fahrers kann zusätzlich noch die elektrische Kapazität des Fahrers gemessen werden.

Außerdem können die abgespeicherten Daten für Ergonomieuntersuchungen des Lenkvorgangs etc. verwendet werden.

In weiterer Ergänzung des erfindungsgemäßen Verfahrens ist vorgesehen, dass der Lenkring in seiner aktuellen Position in mehrere Quadrante unterteilt wird, dass die Positionen der Hände auf dem Lenkring je einem Quadrant zugeordnet werden, dass abhängig von dieser Zuordnung der ohne Umgreifen maximal mögliche Lenkwinkel und/oder das maximale Lenkmoment ermittelt wird, so dass eine unabhängige Kontrolle der Lenkwinkelsensoren von Steer-by-wire-Lenkungen möglich ist.

Des Weiteren kann festgestellt werden, ob der Fahrer einen Lenkwinkel vorgeben kann und ggf. kann ein aktiver Eingriff bzw. eine Warnung bei gefährlicher Händeposition in Abhängigkeit vom durch vorhandene Sensorik erfaßtem Fahrzustand (wie z.B. Geschwindigkeit, Sichtweite etc.) ausgegeben werden.

Durch den Vergleich des maximal vom Fahrer in der derzeitigen Position der Hände aufbringbaren Lenkmoments mit dem von Sensorik (Umfeldsensorik, Drehratensensor) ermittelten notwendigen Lenkmoment, kann festgestellt werden, ob eine Führungsgrößenvorgabe für den Lenkwinkel durch den Fahrer möglich ist.

Weitere Ergänzungen der Verfahrens sehen vor, dass der zeitliche Verlauf der Positionen der Hände am Lenkring ermittelt wird, und/oder dass der zeitliche Verlauf der Positionen der Hände am Lenkring mit Informationen über unfallrelevante Daten korreliert wird, so dass ein Unfall analysiert und ggf. Verbesserungsmöglichkeiten erkannt werden können. Die Informationen über den Unfall können beispielsweise von einem Unfalldatenschreiber stammen.

In weiterer Ausgestaltung des Verfahrens werden die ermittelten Daten gespeichert werden, so dass die Daten beispielsweise von einem elektronischen Fahrtenbuch, einem Unfalldatenschreiber, einer Diebstahlsicherung, einer aktiven Lenkung und/oder einer Fahrstabilitätsregelung genutzt werden können.

Eine Variante der Erfindung sieht vor, dass die Funktion von Lenkwinkelsensoren der Fahrzeuglenkung anhand der Positionen der Hände überprüft wird und erforderlichenfalls eine Warneinrichtung, insbesondere eine akustische Warneinrichtung, aktiviert wird, so dass eine unabhängige Überprüfung der Lenkwinkelsensoren auf Fehlfunktionen möglich ist und somit die Funktionssicherheit der Lenkung erhöht wird.

Bei anderen Ausgestaltungen der Verfahrens wird der zeitliche Verlauf der Positionen der Hände abspeichert und einzelnen Fahrern zugeordnet, wird durch den Vergleich der abgespeicherten zeitlichen Verläufe der Positionen der Hände mit dem aktuell ermittelten zeitlichen Verlauf der Positionen der Hände der Fahrer identifiziert und/oder werden nach der Identifikation des Fahrers Parameter des Fahrzeugs, wie z. B. das Schaltprogramm der Getriebeautomatik, die Spiegel- und die Fahrersitzeinstellung, adaptiert, so dass der Fahrsicherheit und -komfort des Fahrzeugs weiter gesteigert werden.

In weiterer Ergänzung des Verfahrens werden mit Hilfe der ermittelten Daten Reaktionen des Fahrers präjudiziert, so dass das Fahrzeug die Reaktionen des Fahrers optimal umsetzt. Beispielsweise kann, wenn eine Gefahrensituation erkannt wird, die Momentenunterstützung der Servolenkung geändert werden.

Weitere Vorteile und vorteilhafte Ausgestaltungen der Erfindung sind der nachfolgenden Beschreibung, der Zeichnung und den Patentansprüchen entnehmbar.

### Zeichnung

Ein Ausführungsbeispiel des Gegenstands der Erfindung ist in der Zeichnung dargestellt und im Folgenden näher beschrieben. Es zeigen:
- Figur 1: ein Ausführungsbeispiel eines erfindungsgemäßen Lenkrads;
- Figur 2: die Einteilung des Lenkrads in Quadranten;
- Figur 3: ein Ablaufdiagrammm einer Plausibilitätsprüfung eines Lenkwinkelsensors und
- Figur 4: eine Tabelle zum Ermitteln von maximalem Lenkwinkel und maximalem Lenkmoment.

### Beschreibung der Ausführungsbeispiele

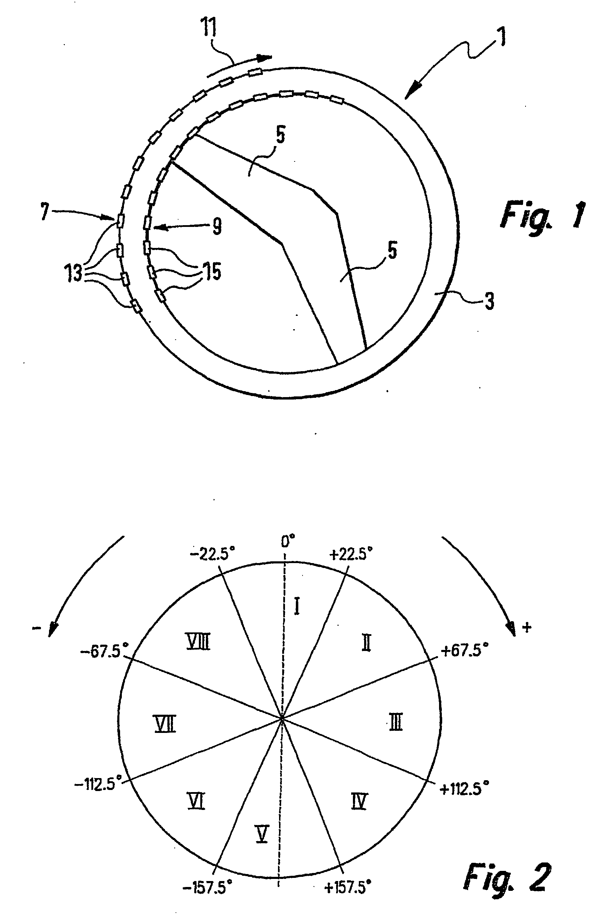

In Fig. 1 ist ein Lenkrad 1 vereinfacht dargestellt. Das besteht aus einem Lenkring 3, einer nicht dargestellten Nabe und zwei Speichen 5. Am Lenkring sind zwei Sensoren 7 und 9 angebracht. Die Sensoren 7 und 9 sind um etwa 180° versetzt zueinander am Umfang des Lenkringquerschnitts angeordnet und erstrecken sich in Längsrichtung 11 über die gesamte Länge des Lenkrings 3. Es können auch z. B. drei um 120° versetzt angeordnete Sensoren vorgesehen werden. Die Sensoren 7 und 9 sind in mehrere Segmente 13 und 15 aufgeteilt. Aus Gründen der Übersichtlichkeit sind nicht alle Segmente 13 und 15 in Fig. 1 dargestellt. Es ist vorteilhaft, wie in Fig. 1 für einen Abschnitt des Lenkrings 3 dargestellt, einen Sensor 9 an der Lenkringinnenseite und einen weiteren Sensor 7 an der Lenkringaussenseite anzubringen. Bei den Sensoren 7 und 9 kann es sich um Foliendrucksensoren, kapazitive Sensoren, Elektrodenpaare oder andere Berührungssensorik handeln.

Um eine eindeutige Unterscheidung zwischen linker und rechter Hand zu ermöglichen sowie die Halteposition zu ermitteln, sind die Segmente 13 und 15 der Sensoren kleiner als eine Fingerbreite. Der Abstand zwischen zwei Segmenten 13 in Längsrichtung 11 und zwei Segmenten 15 in Längsrichtung 11 ist deutlich geringer als eine Fingerbreite.

Die Anzahl der in beiden Sensoren 7 und 9 berührten Segmente 13 und 15 ermöglicht eine Unterscheidung von Daumen und Fingern einer Hand. Der Daumen berührt maximal 2 Segmente 13 oder 15, während die Finger auf der gegenüberliegenden Seite mindestens drei Segmente 15 oder 13 berühren, selbst wenn das Lenkrad nur mit 2 Fingern umfasst wird. Bei einer um 180° versetzten Anordnung der Sensoren berührt der Daumen einer Hand zu einem bestimmten Zeitpunkt immer nur eines oder keines der beiden Sensorfelder. Die Unterscheidung zwischen linker und rechter Hand erfolgt über die relative Position des Daumens gegenüber der Hand- bzw. Fingerfläche. Dabei gilt, daß der Daumen der linken Hand beim Umfassen des Lenkrads sich rechts vom kleinen Finger befindet und der Daumen der rechten Hand links vom kleinen Finger sein muß. Sind die einzelnen Segmente im Uhrzeigersinn aufsteigend numeriert, so
- ist die Nummer des vom Daumen der linken Hand berührten Segments 15 größer als die kleinste Nummer des von den gegenüberliegenden Fingern noch berührten Segments 13, wenn die Finger den an der Lenkradaußenseite angebrachte Sensor 7 berühren,
- ist die Nummer des vom Daumen der linken Hand berührten Segments 13 stets kleiner als die größte Nummer des von den gegenüberliegenden Fingern noch berührten Segments 15, wenn die Finger den an der Lenkradinnenseite angebrachten Sensor 9 berühren,
- ist die Nummer des vom Daumen der rechten Hand berührten Segments 15 stets kleiner als die größte Nummer des von den gegenüberliegenden Fingern noch berührten Segments 13, wenn die Finger den an der Lenkradaußenseite angebrachten Sensor 7 berühren,
- ist die Nummer des vom Daumen der rechten Hand berührten Segments 13 stets größer als die kleinste Nummer des von den gegenüberliegenden Fingern berührten Segments 15, wenn die Finger den an der Lenkradinnenseite angebrachten Sensor 9 berühren.

Diese Regeln sind auch gültig, wenn die Finger einer Hand gleichzeitig beide Sensoren berühren. In diesem Fall bezieht sich "gegenüberliegend" auf den Sensor 7 oder 9, der dem Daumen gegenüberliegt.

Berührt der Daumen das Lenkrad nicht, kann aus der vorhergehenden Position des Daumens relativ zur Finger- bzw. Handfläche auf die das Lenkrad umfassende Hand geschlossen werden. Die Verwendung zeitlich zurückliegender Positionen der Hände zur Identifikation der aktuellen Position der Hände kann auch als Plausibilitätskontrolle eingesetzt werden.

Berühren nicht alle Finger das Lenkrad, so kann der Daumen um nicht mehr als zwei Sensorelemente versetzt auf der jeweils gegenüberliegenden Seite sein.

Berührt zu einem bestimmten Zeitpunkt keine Hand das Lenkrad, kann sofort auf eine unzulässige Position der Hände geschlossen werden. Es kann auch dann auf eine unzulässige Position geschlossen werden, wenn nur einer der beiden Sensoren 7 oder 9 berührt wird.

Bei drei jeweils zueinander um 120° versetzt angeordneten Sensoren kann die Positionsermittlung über die Hand- und Fingerfläche erfolgen. Eine Auswertung der Daumenposition ist in diesem Fall nicht erforderlich.

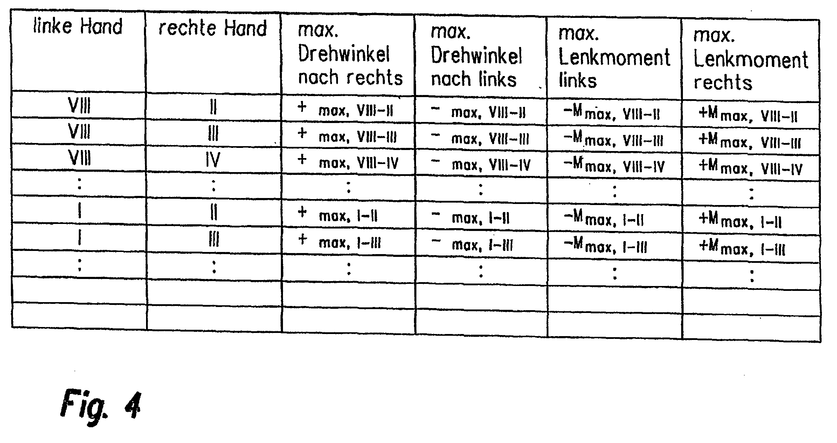

In Fig. 2 ist die Einteilung eines Lenkrads 1 in 8 Quadranten I bis VIII dargestellt. Die Quadranten sind dabei für die Dauer eines Teillenkvorgangs unveränderlich gegenüber dem lokalen Koordinatensystem des Lenkrads mit Ursprung in der Lenksäule. Ein Teillenkvorgang findet statt, wenn eine oder beide Hände relativ zum Lenkring 3 verschoben werden und gleichzeitig eine Drehung des Lenkrads 1 stattfindet. Nach Beendigung eines Teillenkvorgangs werden auf Basis des Lenkwinkelsensors die Quadranten neu berechnet und zugewiesen, so daß die ursprüngliche Quadranteneinteilung gegenüber dem absoluten Bezugssystem auch bei verdrehtem Lenkrad wiederhergestellt wird. Dies erfolgt jedoch nur, wenn der vom Lenkwinkelsensor gemessene Lenkwinkel innerhalb des maximal zulässigen Lenkwinkels nach Fig. 4 liegt, da die maximale Lenkwinkelinformation von den Lenkradsensoren als Plausibiltätskontrolle verwendet wird.

Befindet sich eine Hand in zwei Quadranten, wird sie dem Quadranten zugeordnet, in dem die größere Anzahl Segmenten berührt wird. Jeder Kombination von Positionenen der Hände wird nun ein maximaler Lenkwinkel sowie ein maximal aufzubringendes Lenkmoment zugeordnet. In Fig. 4 ist eine mögliche Zuordnung gezeigt.

Die mit Hilfe des erfindungsgemäßen Lenkrads 1 detektierten und mittels des erfindungsgemäßen Verfahrens ausgewerteten Positionen der Hände können nun zum Beispiel zur Plausibilitätsüberprüfung des Lenkwinkelsensors eingesetzt werden.

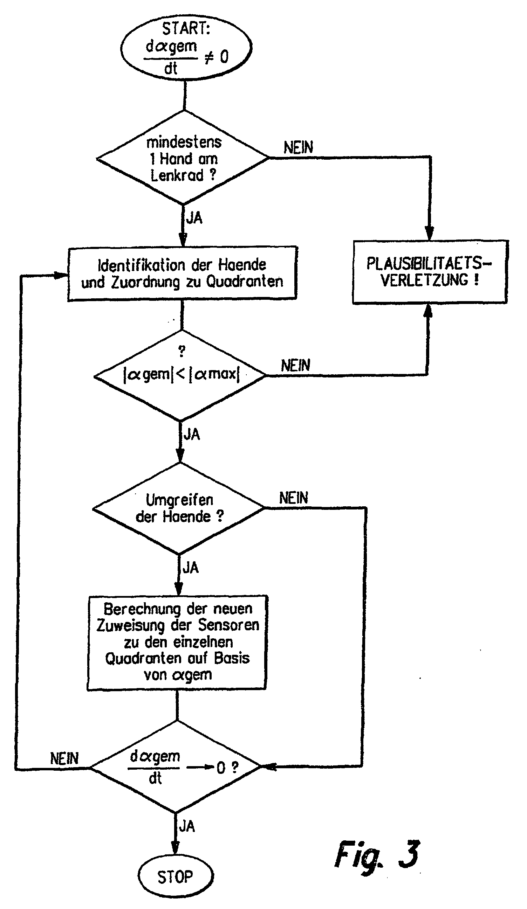

Ein Ablaufplan der Plausibilitätsüberprüfung eines nicht dargestellten Lenkwinkelsensors ist in Fig. 3 dargestellt. Dabei bezeichnet α_{gem} den vom Lenkwinkelsensor gemessenen Lenkwinkel.

Das maximal vom Fahrer aufzubringende Lenkmoment Mₘₐₓ kann mit dem aus Umfeldsensorik und/oder Drehratensensorik berechneten erforderlichen Lenkmoment Mₛₒₗₗ verglichen werden. Im Falle Mₘₐₓ < Mₛₒₗₗ kann eine Warnung und/oder ein aktiver Korrektureingriff erfolgen. Erlaubt die zum Einsatz kommende Sensorik auch eine Messung der Normalkraft zwischen Hand und Lenkrad, kann über den Reibwert zwischen Fingern und Lenkrad eine zusätzliche Auswertung des maximal vom Fahrer auf das Lenkrad 1 übertragbaren Lenkmoments erfolgen.

Ein weiteres Anwendungsgebiet der Händepositionssensorik ist die Vorhersage von Fahrerreaktionen. Manöver wie Spurwechsel, Abbiegen, etc. sind mit typischen Verhaltensmustern und damit auch Händepositionsmustern bzw. Händepositionswechseln korreliert. Die aus Händepositionsmustern bzw. deren Wechseln zu erwartenden Reaktionen können unter Zuhilfenahme weiterer Sensoren wie Radar-Abstandssensor und Video-Daten hinsichtlich möglicher Gefahren (z.B. Zusammenstoß) bewertet werden. Bei Gefahr kann der Fahrer gewarnt werden.

Wird das Lenkrad 1 während des Fahrens nicht berührt oder nur von einer Hand gehalten, könnte ein Warnsignal ausgegeben und/oder die Information gespeichert werden.

## Patentansprüche

1. Lenkrad für ein Fahrzeug, mit einem Lenkring (3), mit einer Nabe, mic mindestens einer Lenkring (3) und Nabe verbindenden Speiche (5), wobei auf dem Lenkring (3) Sensoren (7, 9) angeordnet sind, die über den Umfang des Lenkrings (3) verteilt angeordnet sind und sich über die gesamte Länge des Lenkrings (3) erstrecken, wobei die Sensoren (7, 9) in mehrere in Längsrichtung (11) des Lenkrings (3) hintereinander angeordnete Segmente (13, 15) unterteilt sind, und der Abstand zweier Segmente (13, 15) eines Sensors (7, 9) zueinander in Längsrichtung (11) des Lenkrings (3) kleiner als eine Fingerbreite ist, **dadurch gekennzeichnet, dass** die Segmente (13, 15) der Sensoren (7, 9) in Längsrichtung (11) des Lenkrings (3) kürzer als eine Fingerbreite sind.

2. Lenkrad nach Anspruch 1, **dadurch gekennzeichnet, dass** zwei Sensoren (7, 9) vorhanden sind, und dass die Sensoren (7, 9) am Umfang des Lenkrings (3) um etwa 180° versetzt angeordnet sind.

3. Lenkrad nach Anspruch 1, **dadurch gekennzeichnet, dass** drei Sensoren vorhanden sind, und dass die Sensoren am Umfang des Lenkrings (3) um etwa 120° versetzt angeordnet sind.

4. Lenkrad nach einem der vorhergehenden Ansprüche, **dadurch gekennzeichnet, dass** die Sensoren (7, 9) resistliv, kapazitiv oder induktiv wirkende Sensoren sind.

5. Verfahren zum Detektieren der Position von Händen' auf einem mit Sensoren (7, 9) ausgestatteten Lenkrad (1), mit folgenden Verfahrenschritten :
- numerieren der Segmente (11, 13) der Sensoren (7, 9),
- erfassen der Segmente (11, 13), die von der oder den den Lenkring (3) berührenden Händen beeinflusst werden,
- ermitteln der Position von der oder den Händen auf dem Lenkring (3) aus den Nummern der Segmente (13, 15), die von den den Lenkring (3) berührenden Händen beeinflusst werden, anhand der folgenden Regeln:
Wenn die Segmente (13, 15) im Uhrzeigersinn aufsteigend numeriert sind,
a) ist die Nummer des vom Daumen der linken Hand berührten Segments (15) größer als die kleinste Nummer des von den gegenüberliegenden Fingern noch berührten Segments (13), wenn die Finger den an der Lenkringaußenseite angeordneten Sensor (7) berühren,
b) ist die Nummer des vom Daumen der linken Hand berührten Segments (13) stets kleiner als die größte Nummer des von den gegenüberliegenden Fingern noch berührten Segments .(15), wenn die Finger den an der Lenkringinnenseite angeordneten Sensor (9) berühren,
c) ist die Nummer des vom Daumen der rechten Hand berührten Segments (15) stets kleiner als die größte Nummer des von den gegenüberliegenden Fingern noch berührten Segments (13), wenn die Finger den an der Lenkringaußenseite angeordneten Sensor (7) berühren,
d) ist die Nummer des vom Daumen der rechten Hand berührten Segments (13) stets größer als die kleinste Nummer des von den gegenüberliegenden Fingern noch berührten Segments (15), wenn die Finger den an der Lenkringinnenseite angeordneten Sensor (9) berühren.

6. Verfahren nach Anspruch 5, **dadurch gekennzeichnet, dass** der Lenkring (3) in seiner aktuellen Position in mehrere Quadranten (I bis VIII) unterteilt wird, dass die Positionen der Hände auf dem Lenkring (3) je einem Quadrant (I bis VIII) zugeordner werden, dass abhängig von dieser Zuordnung der ohne Umgreifen maximal mögliche Lenkwinkel und/oder das maximale Lenkmoment ermittelt wird.

7. Verfahren nach Anspruch 5 oder 6, **dadurch gekennzeichnet, dass** der zeitliche Verlauf der Positionen der Hände am Lankring (3) ermittelt wird.

8. Verfahren nach Anspruch 7, **dadurch gekennzeichnet, dass** der zeitliche Verlauf der Positionen der Hände am Lenkring (3) mit Informationen über unfallrelevante Daten korreliert wird.

9. Verfahren nach einem der Ansprüche 5 bis 8, **dadurch gekennzeichnet, dass** die ermittelten Daten gespeichert werden.

10. Verfahren nach einem der Ansprüche 5 bis 9, **dadurch gekennzeichnet, dass** die Funktion von Lenkwinkelsensoren der Fahrzeuglenkung anhand der Positionen der Hände überprüft wird und erforderlichenfalls eine Warneinrichtung, insbesondere eine akustische Warneinrichtung, aktiviert wird.

11. Verfahren nach einem der Ansprüche 5 bis 10, **dadurch gekennzeichnet, dass** der zeitliche Verlauf der Positionen der Hände abspeichert und einzelnen Fahrern zugeordnet wird, und dass durch den Vergleich der abgespeicherten zeitlichen Verläufe der Positionen der Hände mit dem aktuell ermittelten zeitlichen Verlauf der Positionen der Hände der Fahrer identifiziert wird.

12. Verfahren nach Anspruch 11, **dadurch gekennzeichnet, dass** nach der Identifikation des Fahrers Parameter des Fahrzeugs adaptiert werden.

13. Verfahren nach einem, der Ansprüche 5 bis 12, **dadurch gekennzeichnet, dass** mit Hilfe der ermittelten Daten Reaktionen des Fahrers präjudiziert werden.

14. Computerprogrammm das nach einem Verfahren nach einem der Ansprüche 5 bis 13 arbeitet.

15. Computerprogxammm nach Anspruch 14, **dadurch gekennzeichnet, dass** das Computerprogramm auf einem Speichermedium abgespeichert ist.

16. Steuergerät für ein Kraftfahrzeug, das nach einem Verfahren nach einem der Ansprüche 5 bis 13 arbeitet.

## Claims

1. Steering wheel for a vehicle, having a steering ring (3), having a hub, and having at least one spoke (5) connecting the steering ring (3) and hub, there being arranged on the steering ring (3) sensors (7, 9) which are arranged distributed over the circumference of the steering ring (3) and extend over the entire length of the steering ring (3), the sensors (7, 9) being subdivided into a plurality of segments (13, 15) arranged one behind another in the longitudinal direction (11) of the steering ring (3), and the spacing between two segments (13, 15) of a sensor (7, 9) from one another in the longitudinal direction (11) of the steering ring (3) being smaller than a finger width, **characterized in that** the segments (13, 15) of the sensors (7, 9), in the longitudinal direction (11) of the steering ring (3), are shorter than a finger width.

2. Steering wheel according to Claim 1, **characterized in that** two sensors (7, 9) are present, and **in that** the sensors (7, 9) are arranged offset by approximately 180° on the circumference of the steering ring (3).

3. Steering wheel according to Claim 1, **characterized in that** three sensors are present, and **in that** the sensors are arranged offset by approximately 120° on the circumference of the steering ring (3).

4. Steering wheel according to one of the preceding claims, **characterized in that** the sensors (7, 9) are resistively, capacitively or inductively acting sensors.

5. Method for detecting the position of hands on a steering wheel (1) fitted with sensors (7, 9), having the following method steps:
- numbering the segments (11, 13) of the sensors (7, 9),
- detecting the segments (11, 13) which are influenced by the hand or hands touching the steering ring (3),
- determining the position of the hand or hands on the steering ring (3) from the numbers of the segments (13, 15) which are influenced by the hands touching the steering ring (3), with the aid of the following rules:
when the segments (13, 15) are numbered rising in the clockwise direction,
a) the number of the segment (15) touched by the thumb of the left hand is greater than the smallest number of the segment (13) still being touched by the opposite fingers when the fingers touch the sensor (7) arranged on the outside of the steering ring,
b) the number of the segment (13) touched by the thumb of the left hand is always smaller than the largest number of the segment (15) still being touched by the opposite fingers when the fingers touch the sensor (9) arranged on the inside of the steering ring,
c) the number of the segment (15) touched by the thumb of the right hand is always smaller than the largest number of the segment (13) still being touched by the opposite fingers when the fingers touch the sensor (7) arranged on the outside of the steering ring,
d) the number of the segment (13) touched by the thumb of the right hand is always greater than the smallest number of the segments (15) still being touched by the opposite fingers when the fingers touch the sensor (9) arranged on the inside of the steering ring.

6. Method according to Claim 5, **characterized in that** the steering ring (3) is subdivided in its current position into a plurality of quadrants (I to VIII), **in that** the positions of the hands on the steering ring (3) are each assigned to a quadrant (I to VIII), and **in that** the maximum possible steering angle without crossing the hands and/or the maximum steering torque are/is determined as a function of this assignment.

7. Method according to Claim 5 or 6, **characterized in that** the time profile of the positions of the hands on the steering ring (3) is determined.

8. Method according to Claim 7, **characterized in that** the time profile of the positions of the hands on the steering ring (3) is correlated with information about accident-relevant data.

9. Method according to one of Claims 5 to 8, **characterized in that** the determined data are stored.

10. Method according to one of Claims 5 to 9, **characterized in that** the operation of steering angle sensors of the vehicle steering is checked with the aid of the positions of the hands and, if necessary, a warning device, in particular an acoustic warning device, is activated.

11. Method according to one of Claims 5 to 10, **characterized in that** the time profile of the positions of the hands is stored and assigned to individual drivers, and **in that** the driver is identified by comparing the stored time profiles of the positions of the hands with the currently determined time profile of the position of the hands.

12. Method according to Claim 11, **characterized in that** the parameters of the vehicle are adapted after identification of the driver.

13. Method according to one of Claims 5 to 12, **characterized in that** reactions of the driver are prejudged with the aid of the determined data.

14. Computer program which operates according to the method according to one of Claims 5 to 13.

15. Computer program according to Claim 14, **characterized in that** the computer program is stored on a storage medium.

16. Control unit for a motor vehicle which operates according to a method according to one of Claims 5 to 13.

## Revendications

1. Volant de direction pour un véhicule comportant une couronne (3) avec un moyeu et au moins un rayon (5) reliant la couronne (3) et le moyeu, la couronne (3) comportant des capteurs (7, 9) répartis à sa périphérie et s'étendant sur toute sa longueur,
les capteurs (7, 9) étant subdivisés en plusieurs segments (13, 15) successifs dans la direction longitudinale (11) de l'anneau (3), et
la distance entre deux segments (13, 15) d'un capteur (7, 9) dans la direction longitudinale (11) de la couronne (3) est inférieure à une largeur de doigt,
**caractérisé en ce que**
les segments (13, 15) des capteurs (7, 9) dans la direction périphérique (11) de la couronne (3) sont plus courts qu'une largeur de doigt.

2. Volant de direction pour un véhicule selon la revendication 1,
**caractérisé par**
deux capteurs (7, 9) et les capteurs (7, 9) sont décalés d'environ 180° à la périphérie de la couronne (3) du volant.

3. Volant de direction pour un véhicule selon la revendication 1,
**caractérisé par**
trois capteurs décalés sensiblement de 120° à la périphérie de la couronne (3).

4. Volant de direction pour un véhicule selon l'une des revendications précédentes,
**caractérisé en ce que**
les capteurs (7, 9) sont à effets résistifs, capacitifs ou inductifs.

5. Procédé de détection de la position des mains sur un volant (1) équipé de capteurs (7, 9), comprenant les étapes suivantes :
- on numérote les segments (11, 13) des capteurs (7, 9),
- on saisit les segments (11, 13) influencés par la ou les mains touchant la couronne (3) du volant,
- On détermine la position de la ou des mains sur la couronne (3) à partir des numéros des segments (13, 15) influencés par les mains touchant la couronne (3) en appliquant les règles suivantes :
si les segments (13, 15) sont numérotés dans le sens croissant des aiguilles d'une montre,
a) si les segments (13, 15) sont numérotés dans le sens croissant des aiguilles d'une montre le numéro du segment (15) touché par le pouce de la main gauche est supérieur au plus petit numéro du segment (13) encore touché par les doigts opposés,
b) si les doigts touchent le capteur (7) prévu sur le côté extérieur de la du volant, le numéro du segment (13) touché par le pouce de la main gauche est toujours inférieur au plus grand numéro du segment (15) encore touché par les doigts opposés,
c) si les doigts touchent le capteur (9) prévu sur le côté intérieur de l'anneau du volant, le numéro du segment (15) touché par le pouce de la main droite est toujours inférieur au plus grand numéro du segment (13) encore touché par les doigts opposés,
d) si les doigts touchent le capteur (7) prévu du côté extérieur de la couronne,
du volant le numéro du segment (13) touché par le pouce de la main droite est toujours supérieur au plus petit numéro du segment (15) encore touché par les doigts opposés, si les doigts touchent le capteur (9) sur le côté intérieur de la couronne.

6. Procédé selon la revendication 5,
**caractérisé en ce que**
dans sa position actuelle la couronne (3) est subdivisé en plusieurs cadrans (I-VIII), les positions des mains sur la couronne (3) sont associées à chaque cadran (I-VIII), et en fonction de cette association on détermine l'angle de braquage et/ou le couple de braquage maximum possible en fonction de cette disposition et sans changer de position.

7. Procédé selon la revendication 5 ou 6,
**caractérisé en ce qu'**
on détermine l'évolution dans le temps des positions des mains sur la couronne (3) du volant.

8. Procédé selon la revendication 7,
**caractérisé en ce qu'**
on met en corrélation l'évolution dans le temps des positions des mains sur la couronne du volant (3) avec des informations concernant les données relatives à un accident.

9. Procédé selon l'une des revendications 5 à 8,
**caractérisé en ce qu'**
on met en mémoire les données obtenues.

10. Procédé selon l'une des revendications 5 à 9,
**caractérisé en ce qu'**
on vérifie le fonctionnement des capteurs d'angle de braquage ou de la direction du véhicule à l'aide des positions des mains et si nécessaire on active une installation d'avertissement notamment un avertisseur acoustique.

11. Procédé selon l'une des revendications 5 à 10,
**caractérisé en ce qu'**
on associe l'évolution dans le temps des positions des mains enregistrées et des différents conducteurs et par comparaison des évolutions des positions dans le temps, enregistrées pour les mains, avec l'évolution dans le temps des positions des mains déterminée actuellement on identifie le conducteur.

12. Procédé selon la revendication 11,
**caractérisé en ce qu'**
on adapte les paramètres du véhicule après identification du conducteur.

13. Procédé selon l'une des revendications 5 à 12,
**caractérisé en ce qu'**
on prévoit les réactions du conducteur à l'aide des données obtenues.

14. Programme d'ordinateur selon un procédé de l'une des revendications 5 à 13.

15. Programme d'ordinateur selon la revendication 14,
**caractérisé en ce qu'**
il est enregistré sur un support de mémoire.

16. Appareil de commande d'un véhicule automobile appliquant un procédé selon l'une des revendications 5 à 13.
